# EUROPEAN PATENT SPECIFICATION

(11) **EP 0 600 867 B1**
(45) Date of publication and mention of the grant of the patent: **04.09.1996**
(21) Application number: 91910946.2
(22) Date of filing: 05.06.1991
(51) Int. Cl.: B29C 39/42, B29C 70/00

(54) **A METHOD FOR VACUUM MOULDING OF LARGE OBJECTS OF SYNTHETIC RESIN**
VAKUUMFORMVERFAHREN FÜR GROSSTEILE AUS KUNSTHARZ
PROCEDE DE MOULAGE SOUS VIDE D'OBJETS DE GRANDES DIMENSIONS EN RESINE SYNTHETIQUE

(30) Priority: 08.06.1990 SE 9002066
(43) Date of publication of application: 15.06.1994
(73) Proprietor: THULIN, Dag, F-75008 Paris (FR)
(72) Inventor: THULIN, Dag, F-75008 Paris (FR)
(74) Representative: Delmar, John-Ake
(86) International application number: PCT/SE91/00390
(87) International publication number: WO 91/18725

(56) References cited:
- EP-A- 0 382 536
- GB-A- 1 432 333
- US-A- 3 579 738

## Description

The present invention relates to a method for vacuum moulding of large objects of synthetic resin in a dismountable mould with reinforcing materials placed in the same, in which monomer with hardening agent and possible accelerator are supplied to the cavity of the mould from below and upwards for filling said cavity held under vacuum.

In vacuum moulding of objects of synthetic resin, a dismountable mould is used with reinforcing materials placed in the same. The vacuum moulding is effected in such a way that vacuum is applied to the cavity through one or several connections arranged at the upper portion of the mould, and ready-mixed synthetic resin in the form of monomer and hardening agent is fed into the lower portion of the mould, the synthetic resin rising in the mould by way of the applied vacuum.

Since the first synthetic resin supplied shall rise all the way until it reaches the uppermost part of the mould, which, when large objects shall be manufactured, takes long time, the synthetic resin will get time to become viscous, producing lumps and plugs of synthetic resin in the cavity, so that continued rising of said synthetic resin in the cavity is prevented. Thus, it is difficult to manufacture large, particularly shell-like objects, i.e. with little thickness relative to the surface area, for example domes, boat hulls, car bodies, etc. with vacuum moulding.

In known methods for vacuum moulding the above-mentioned problems are avoided by using only small amounts of hardening agent in the monomer and subsequent heating of the mould after that said mould has been filled with synthetic resin for hardening the same. However, this method is circumstantial and difficult to carry out when large objects of synthetic resin shall be vacuum moulded.

One of the great advantages of vacuum moulding is that it is not harmful to the environment, since no emission of monomer to the atmosphere takes place. Another advantage is that the moulding is effected in one single working step, whereby the manufactured object becomes totally homogeneous and free from voids due to the vacuum applied.

The object of the invention is to provide a method for vacuum moulding, which makes it possible to manufacture large objects of synthetic resin without the above-mentioned disadvantages. This is achieved according to the invention mainly in that the synthetic resin is supplied at least at one position in said cavity initially in the lower portion of said cavity and is then successively moved upwards at such a speed that said position is located just below the surface of said synthetic resin as it is supplied and riscs in said mould.

In a preferred embodiment according to the invention the synthetic resin is supplied through at least one hose, which is sealingly inserted through a wall in the upper portion of the mould as deep into the cavity that its free end is positioned in the lower portion of said cavity, and said hose or hoses are progressively pulled upwards at such a speed that said free end or ends of said hose or hoses are positioned just below the surface of said synthetic resin as it is supplied and rises in said mould.

With the method according to the invention, can for instance domes, boat hulls, flagstaffs, special types of pipes with a smooth surface, etc., be manufactured.

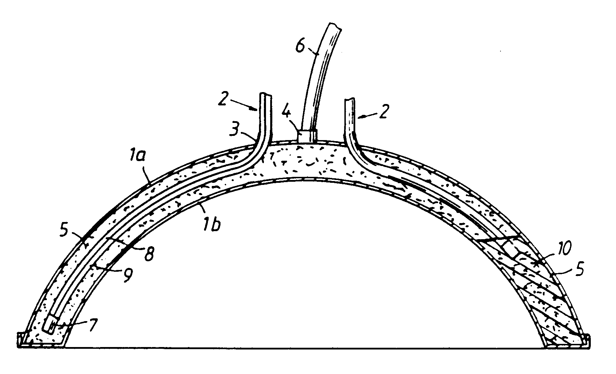

A non-limiting example of the invention will now be described with reference to the accompanying drawing, in which a sectional view of a mould for effecting the method for vacuum moulding according to the invention is shown for manufacturing a half-spherical dome, the left side of the drawing illustrating the position of the hose in an initial stage and its right side illustrating the hose partly pulled up and said mould partly filled with synthetic resin.

The method according to the invention is applicable to different types of known apparatuses for vacuum moulding, and will be described below in connection with a mould 1 chosen as an example, and which is dismountable in its lower portion and being composed of two complementary mould parts 1a, 1b. At least one synthetic resin supply hose 2 is sealingly inserted through the wall of preferably the upper mould part 1a in its uppermost portion through any type of sealing 3. At least one connection 4 for the application of vacuum is provided in the upper portion of said mould 1, as seen in the drawing, suitably in the wall of said upper mould part 1a for applying vacuum to the interior of said mould 1. The vacuum connection 4 is connected to one end of a suction pipe 6, the other end of which is connected to a vacuum apparatus (not shown), such as a vacuum pump, which is adapted to provide vacuum in the mould. In the case of a vacuum pump its outlet is connected to suitable filters and separation apparatuses for monomer (not shown), so that no emission to the atmosphere occurs.

In the following way an object of synthetic resin is manufactured in a mould of this type by the method according to the invention. With the mould parts 1a, 1b separated from each other, the surfaces of the mould directed towards the cavity are coated with release agent and if desired afterwards with a surface layer, for instance of gel coat, depending upon which type of surface the object to be manufactured is to have. Then, desired amount and type of reinforcing material 5 is placed in the mould in the form of one or more self-supporting or spray applied fibre layers or the like on one or both mould parts. The reinforcing material 5 can for instance be glass fibre, carbon fibre, Kevlar (registered trade mark), etc. The amount is preferably such that the object of synthetic resin to be manufactured will contain 20-80% by weight of reinforcing material.

When bringing together the mould parts 1a, 1b for closing the mould 1, the hose or hoses 2 are inserted through the sealings 3 and placed with their free ends quite close to the bottom of the cavity. The vacuum apparatus is then connected through the suction pipe 6 to the vacuum connection 4, providing an underatmospheric pressure or vacuum in the mould 1. This vacuum must not be too large, since the mould 1 then must have a very heavy structure for avoiding deformation of said mould. The monomer with added hardening agent and possible accelerator are introduced, preferably through pumping, through the hose or hoses 2 into the cavity. Alternatively, the adding of the hardening agent can be made at the free end of the hose 2, which then is provided with two channels 8,9 and a mixing nozzle 7 at said end (as shown to the left in the drawing). A certain period of time after the beginning of the introduction of the synthetic resin, and when the lower portion of the cavity has been filled to such an extent that the free end of the hose or hoses 2 is positioned just below the surface of the synthetic resin, a successive pulling out of the hoses of the mould 1 is started at such a speed that the free ends of said hoses during the whole vacuum moulding remain positioned just below the surface of the synthetic resin.

The vacuum applied to the cavity shall be maintained during the whole vacuum moulding.

Since the mould 1 is filled with synthetic resin from the bottom and upwards, as shown in the drawing, while the hoses 2 are successively pulled out, it does not matter if the synthetic resin begins to cure at the bottom of said mould 1.

Even if the synthetic resin can be sucked into the mould 1 by the vacuum applied to the cavity, it is preferred, in order to avoid making the hoses 2 too coarse in order not to collapse, to supply the synthetic resin by pumping. When producing shell-like objects the hoses 2 have preferably flattened cross section with a width amounting to 60-20%, preferably 40-30%, of the width of the cavity.

The synthetic resin introduced into the cavity can be mixed with chopped reinforcing material of the same kind as the reinforcement 5 for reinforcing the channels, which possibly may be formed in the reinforcing material, when the hoses are pulled out of the mould. The number of hoses needed is depending upon the viscosity of the monomer, the amount of reinforcing material in the cavity and the dimension of the hoses 2, which in turn is depending upon the width of the cavity.

By the method according to the invention homogeneous objects of synthetic resin free from voids are obtained, and rapidly as well as slowly curing synthetic resins can be used, while the emission of monomer to the atmosphere is minimized.

Although the invention has be described above with reference to a mould of half-spherical shape it is obvious to the artisan that a mould of any suitable shape can be used. Also, while hoses are used for supplying the synthetic resin into the mould it is obvious that other means can be used, for instance a number of closeable inlet openings, placed horizontally along said mould and at different heights, which openings are successively put into operation for filling said mould.

## Claims

1. A method for vacuum moulding of large objects of synthetic resin in a dismountable mould with reinforcing materials placed in the same, in which monomer with hardening agent and possible accelerator are supplied to the cavity from below and upwards for filling said cavity held under vacuum, **characterized in** that the synthetic resin is supplied at least at one position in said cavity situated initially in the lower portion thereof and then successively moved upwards at such a speed that said position is located just below the surface of said synthetic resin as it is supplied and rises in said mould.

2. Method according to claim 1, **characterized in** supplying said synthetic resin through at least one hose, sealingly inserted through a wall in the upper portion of the mould as deep into said cavity that its free end is positioned in the lower portion of said cavity, and progressively pulling up said hose or hoses with such a speed that said free end or ends of said hose or hoses are positioned just below the surface of said synthetic resin as it is supplied and rises in the mould.

3. Method according to claim 1 or 2, **characterized in** that the monomer and the hardening agent are supplied by pumping.

4. Method according to claim 1-3, **characterized in** that the monomer is mixed with chopped reinforcing material.

5. Method according to claim 2-4, for vacuum moulding of large, shell-like objects, i.e. with little thickness relative to surface area, **characterized in** that said hose or hoses have flattened cross section with a width amounting to 60-20% and preferably 40-30%, of the width of said cavity.

6. Method according to claim 2-5, **characterized in** that said hose or hoses are provided with two channels for monomer and hardening agent respectively, and that said monomer and said hardening agent are mixed continuously with each other at the free end of said hose.

## Patentansprüche

1. Verfahren zum Vakuumformen großer Gegenstände aus Kunstharz in einem auseinandernehmbaren Formwerkzeug mit darin vorgesehenen Verstärkungsmaterialien, wobei dem Hohlraum von unten und oben ein Monomer mit einem Härtemittel und gegebenenfalls einem Beschleuniger zugeführt wird, um den unter Vakuum gehaltenen Hohlraum zu füllen,
dadurch gekennzeichnet, daß das Kunstharz zumindest an einer Stelle dem Hohlraum zugeführt wird, die sich anfangs im unteren Abschnitt des Hohlraums befindet und dann nach und nach aufwärts bewegt wird, und zwar mit einer solchen Geschwindigkeit, daß sich die Stelle immer direkt unterhalb der Oberfläche des Kunstharzes befindet, während dieses zugeführt wird und innerhalb des Formwerkzeuges steigt.

2. Verfahren nach Anspruch 1,
dadurch gekennzeichnet, daß das Kunstharz durch zumindest einen Schlauch zugeführt wird, der dichtend durch eine Wand im oberen Abschnitt des Formwerkzeugs so tief in den Hohlraum eingeführt wird, daß sich sein freies Ende im unteren Abschnitt des Hohlraums befindet, wobei der Schlauch oder die Schläuche progressiv mit einer solchen Geschwindigkeit hochgezogen werden, daß sich das freie Ende oder die freien Enden des Schlauchs oder der Schläuche immer direkt unterhalb der Oberfläche des Kunstharzes befinden, während dieses zugeführt wird und in dem Formwerkzeug steigt.

3. Verfahren nach Anspruch 1 oder 2,
dadurch gekennzeichnet, daß das Monomer und das Härtemittel durch Pumpen zugeführt werden.

4. Verfahren nach einem der Ansprüche 1 bis 3,
dadurch gekennzeichnet, daß das Monomer mit einem zerteilten Verstärkungsmaterial gemischt ist.

5. Verfahren nach einem der Ansprüche 2 bis 4,
zum Vakuumformen von großen, schalenähnlichen Gegenständen, d.h. mit geringer Dicke im Verhältnis zum Oberflächenbereich, dadurch gekennzeichnet, daß der Schlauch oder die Schläuche einen abgeflachten Querschnitt mit eine Breite von 60 - 20 %, bevorzugt 40 - 30 %, der Breite des Hohlraums aufweisen.

6. Verfahren nach einem der Ansprüche 2 - 5,
dadurch gekennzeichnet, daß der Schlauch oder die Schläuche zwei Kanäle für das Monomer bzw. das Härtemittel aufweisen, und daß das Monomer und das Härtemittel kontinuierlich am freien Ende des Schlauchs miteinander vermischt werden.

## Revendications

1. Un procédé de moulage sous vide d'objets de grandes dimensions en résine synthétique dans un moule démontable, des matières de renforcement étant placées dans celui-ci, procédé dans lequel un monomère avec un agent de durcissement et éventuellement un accélérateur sont délivrés à la cavité à partir du bas et vers le haut pour remplir ladite cavité maintenue sous vide, **caractérisé** en ce que la résine synthétique est délivrée au moins en une position dans ladite cavité située initialement dans la partie inférieure de celle-ci, puis déplacée successivement vers le haut à une vitesse telle que ladite position est située juste au-dessous de la surface de ladite résine synthétique lorsqu'elle est délivrée et monte dans ledit moule.

2. Procédé selon la revendication 1, **caractérisé** par la délivrance de ladite résine synthétique à travers au moins une tubulure, introduite de manière étanche à travers une paroi à la partie supérieure du moule et à une profondeur telle dans ladite cavité que son extrémité libre est située dans la partie inférieure de ladite cavité, et par la traction progressive vers le haut de ladite ou desdites tubulures à une vitesse telle que ladite ou lesdites extrémités libres de ladite ou desdites tubulures sont situées juste au-dessous de la surface de ladite résine synthétique lorsqu'elle est délivrée et monte dans le moule.

3. Procédé selon la revendication 1 ou 2, **caractérisé** en ce que le monomère et l'agent de durcissement sont délivrés par pompage.

4. Procédé selon la revendication 1-3, **caractérisé** en ce que le monomère est mélangé avec une matière de renforcement divisée.

5. Procédé selon la revendication 2-4, pour le moulage sous vide d'objets de grandes dimensions analogues à une coque, c'est-à-dire d'une épaisseur faible par rapport à l'aire de surface, **caractérisé** en ce que ladite ou lesdites tubulures ont une section droite aplatie d'une largeur s'élevant à 60-20 %, et de préférence 40-30 %, de la largeur de ladite cavité.

6. Procédé selon la revendication 2-5, **caractérisé** en ce que ladite ou lesdites tubulures sont munies de deux canaux respectivement pour le monomère et l'agent de durcissement, et en ce que ledit monomère et ledit agent de durcissement sont mélangés en continu l'un avec l'autre à l'extrémité libre de ladite tubulure.
